(19) Europäisches Patentamt
European Patent Office
Office européen des brevets

(11) Veröffentlichungsnummer: **0 476 337 A1**

# (12) EUROPÄISCHE PATENTANMELDUNG

(21) Anmeldenummer: **91113982.2**

(22) Anmeldetag: **21.08.91**

(51) Int. Cl.[5]: **C08J 9/08**, C08G 18/00, //C08L75/04,C08L79/04

(30) Priorität: **06.09.90 DE 4028211**

(43) Veröffentlichungstag der Anmeldung: **25.03.92 Patentblatt 92/13**

(84) Benannte Vertragsstaaten: **AT BE CH DE DK ES FR GB IT LI NL SE**

(71) Anmelder: **BASF Aktiengesellschaft**
**Carl-Bosch-Strasse 38**
**W-6700 Ludwigshafen(DE)**

(72) Erfinder: **Hartwig, Uwe, Dr.**
**Beethovenstrasse 5**
**W-6800 Mannheim 1(DE)**
Erfinder: **Kessler, Hansjürgen, Dr.**
**Schwanenstrasse 1 b**
**W-6800 Mannheim 51(DE)**
Erfinder: **Ropte, Eckhard, Dr.**
**Wöhlerstrasse 12**
**W-6700 Ludwigshafen(DE)**

## (54) Verfahren zur Herstellung von Urethangruppen oder Urethan- und Isocyanuratgruppen enthaltenden Hartschaumstoffen.

(57) Gegenstand der Erfindung ist ein Verfahren zur Herstellung von Urethangruppen oder Urethan- und Isocyanuratgruppen enthaltenden Hartschaumstoffen durch Umsetzung von

a) organischen und/oder modifizierten organischen Polyisocyanaten mit

b) mindestens einer höhermolekularen Verbindung mit mindestens zwei reaktiven Wasserstoffatomen und gegebenenfalls

c) niedermolekularen Kettenverlängerungs- und/oder Vernetzungsmitteln

in Gegenwart von

d) Treibmitteln,

e) Katalysatoren und gegebenenfalls

f) Hilfsmitteln und/oder Zusatzstoffen,

wobei als Treibmittel (d) mindestens eine organische Carbonsäure, vorzugsweise aliphatische Monocarbonsäure, gegebenenfalls in Verbindung mit Wasser und/oder einem physikalisch wirkenden Treibmittel, und als Katalysatoren (e) Polyisocyanuratkatalysatoren, vorzugsweise Alkali- oder Ammoniumsalze von organischen Carbonsäuren oder Tris(dialkylaminoalkyl)-s-hexahydrotriazine, verwendet werden.

EP 0 476 337 A1

Gegenstand der Erfindung ist ein Verfahren zur Herstellung von Urethangruppen oder Urethan- und Isocyanuratgruppen enthaltenden Hartschaumstoffen, bei welchem als Treibmittel mindestens eine organische Carbonsäure, gegebenenfalls in Verbindung mit Wasser und/oder einem physikalisch wirkenden Treibmittel, und als Katalysatoren Polyisocyanuratkatalysatoren, vorzugsweise Alkali- oder Ammoniumsalze von organischen Carbonsäuren oder Tris(dialkylaminoalkyl)-s-hexahydrotriazine, eingesetzt werden.

Die Herstellung von Urethangruppen enthaltenden Schaumstoffen - im folgenden abgekürzt PU-Schaumstoffe genannt - mit den verschiedenartigsten mechanischen Eigenschaften durch Umsetzung von höhermolekularen Polyhydroxylverbindungen und gegebenenfalls niedermolekularen Kettenverlängerungs- oder Vernetzungsmitteln mit organischen Polyisocyanaten in Gegenwart von Katalysatoren, Treibmitteln und gegebenenfalls Hilfsmitteln und/oder Zusatzstoffen ist bekannt und wird in zahlreichen Patent- und Literaturveröffentlichungen beschrieben. Bei geeigneter Wahl der Aufbaukomponenten lassen sich nach diesen verfahren sowohl weiche, elastische wie halbharte oder harte PU-Schaumstoffe herstellen.

Die Herstellung von Urethan- und Isocyanuratgruppen gebunden enthaltenden Schaumstoffen ist ebenfalls nicht neu. Nach diesem Verfahren werden organische Polyisocyanate in Gegenwart von Katalysatoren partiell cyclisiert und polymerisiert und die erhaltenen Isocyanuratgruppen (PIR) enthaltenden Polyisocyanate danach mit Polyhydroxylverbindungen in Gegenwart von PU-Katalysatoren und Treibmitteln zur Reaktion gebracht. Nach einer anderen Verfahrensweise werden die organischen Polyisocyanate in Gegenwart von unterschüssigen Mengen an Polyhydroxylverbindungen, verschiedenartig wirkenden Katalysatoren und Treibmitteln gleichzeitig partiell cyclisiert und die Polyhydroxylverbindungen an die gebildeten isocyanuratgruppenhaltigen und unmodifizierten Polyisocyanate addiert.

Eine zusammenfassende übersicht über die Herstellung von PU-Hartschaumstoffen und PU-PIR-Schaumstoffen wird z.B. publiziert in der Monographie von J.H. Saunders und K.C. Frisch "High Polymers", Band XVI, Polyurethanes, Teile 1 und 2, Verlag Interscience Publishers 1962 bzw. 1964 oder dem Kunststoff-Handbuch, Band VII, Polyurethane, Carl-Hanser Verlag, München, 1. Auflage 1966 und 2. Auflage 1983.

Bekannt ist ferner die Verwendung derartiger PU- oder PU-PIR-Hartschaumstoffe zur Herstellung von Verbund- oder Sandwichelementen, die üblicherweise aufgebaut sind aus einem Hartschaumstoff und mindestens einer, vorzugsweise zwei Deckschichten aus einem starren oder elastischen Material, wie z.B. Papier, Kunststoffolien, Metallblechen, Glasvliesen, Spanplatten u.a. sowie die Ausschäumung von Hohlräumen in Haushaltgeräten, wie Kühlmöbeln, beispielsweise Kühlschränken oder -truhen oder von Heißwasserspeichern mit solchen Hartschaumstoffen als Wärmedämmstoff.

Als Treibmittel zur Herstellung der wärme- und kältedämmenden PU- oder PU-PIR-Hartschaumstoffe werden weltweit in großem Maßstab Fluorchloralkane, vorzugsweise Trichlorfluormethan, eingesetzt. Nachteilig an diesen Treibgasen ist lediglich die Belastung der Umwelt, da sie in Verdacht stehen, in der Stratosphäre am Abbau der Ozonschicht beteiligt zu sein.

Zur Reduzierung der Fluorchloralkane wird als Treibgas vorwiegend Wasser eingesetzt, das mit dem Polyisocyanat unter Kohlendioxidentwicklung reagiert, welches als eigentliches Treibmittel wirkt. Nachteilig an solchen Hartschaum-Formulierungen ist der große Polyisocyanatverbrauch allein für die Reaktion des Wassers zur Bildung des Kohlendioxids. Nachteilig ist ferner vielfach eine Verschlechterung des Eigenschaftsbilds der erhaltenen PU-Schaumstoffe. Um beispielsweise die gleichen Brandtests zu bestehen, muß der Gehalt an Flammschutzmitteln erhöht werden. Außerdem zeigen mit Kohlendioxid aus Wasser getriebene Schaumstoffe ein erhöhtes Schrumpfverhalten, eine verstärkte Sprödigkeit und die Reaktionsmischungen zu ihrer Herstellung eine geringere Fließfähigkeit.

Bekannt ist ferner die Bildung von Kohlendioxid durch Umsetzung von organischen Carbonsäuren mit Isocyanaten nach folgenden Reaktionsgleichungen:

$$R\text{-}COOH + R'\text{-}N{=}C{=}O \rightarrow R\text{-}CO\text{-}NH\text{-}R' + CO_2$$
$$R\text{-}CO\text{-}NH\text{-}R' + R'\text{-}N{=}C{=}O \rightarrow R\text{-}CO\text{-}NR'\text{-}CO\text{-}NHR'$$

Demnach entstehen aus 1 Mol Carbonsäure und 2 Molen Isocyanat Acylharnstoff und 1 Mol Kohlendioxid.

Entsprechend diesen Reaktionen wurden auch Carbonsäuren als Treibmittel zur Herstellung von PU-Schaumstoffen eingesetzt.

Nach Angaben der DE-A 32 23 567 (GB 2 103 228) finden zur Herstellung eines Schaumstoffs als Bläh- oder Treibmittel mindestens eine Carbonsäure oder ein Carbonsäuresalz Verwendung, die mit einem Isocyanat umgesetzt ein Gas freisetzen. Bei Verwendung der als bevorzugt genannten Ameisensäure bildet sich neben einem Mol Kohlendioxid zusätzlich ein Mol toxisches Kohlenmonoxid, so daß die Verschäumungsvorrichtungen erhöhter Schutzvorrichtungen bedürfen.

Als geeignete Katalysatoren zur Herstellung von mit Carbonsäuren getriebenen PU-Schaumstoffen

werden in der US-A-4 473 666 Katalysatorsysteme beschrieben, die ein Dialkylcyclohexylamin und ein N-substituiertes Alkoxyalkylpiperazin enthalten.

Bei Verwendung von Ameisensäure als Treibmittel zur Bildung von PU-Hartschaumstoffen finden gemäß EP-A-0 322 801 Aminkatalysatorkombinationen Verwendung, die enthalten: 30 bis 50 Gew.-Teile Triethylendiamin, 30 bis 50 Gew.-Teile Bis(dimethylaminoethyl)ether und/oder N,N,N',N'',N''-Pentamethyldiethylentriamin und 0 bis 40 Gew.-Teile Tetramethylhexamethylendiamin und Trimethylaminoethylpiperazin.

Zur Herstellung von PU-Formkörpern mit einer Rohdichte von mindestens 250 $kg/m^3$ und einer kompakten Oberfläche durch Formverschäumung eines Reaktionsgemisches, enthaltend Polyisocyanate und mindestens eine Verbindung mit mindestens zwei reaktiven Wasserstoffatomen, mit einer Isocyanatkennzahl im Bereich von 75 bis 1500 wird gemäß EP-A-0 372 292 als Treibmittel eine organische Carbonsäure, gegebenenfalls in Verbindung mit weiteren chemischen oder physikalischen Treibmitteln verwendet.

Nach Angaben der EP-A-373 456 findet zur Herstellung von offenzelligen, hydrophilen PU-Schaumstoffen mit einer Dichte von 10 bis 16 $kg/m^3$ als Treibmittel Wasser Verwendung. Zusätzlich werden jedoch, bezogen auf 100 g des Gemischs aus Polyhydroxylverbindung, Wasser und gegebenenfalls Zusatzmitteln, 5 bis 20 mmol einer Säure, z.B. Phosphorsäure, mitverwendet.

Nachteilig an den genannten Verfahren ist, daß das aus der Carbonsäure und Isocyanat gebildete Kohlendioxidvolumen, das bei gleichzeitiger Polyaddition der Aufbaukomponenten, ein Aufschäumen der Reaktionsmischung bewirkt, üblicherweise geringer ist als der theoretisch mögliche Wert. Es zeigte sich ferner, daß in Gegenwart von üblichen Polyurethankatalysatoren, wie z.B. tertiären Aminen und/oder Metallsalzen von organischen Carbonsäuren, häufig die Carbonsäure-Isocyanatreaktion gehemmt und dadurch die Kohlendioxidausbeute zusätzlich reduziert wird. Dies bedeutet, daß zur Erzielung einer bestimmten Schaumdichte mehr Carbonsäure eingesetzt werden muß, als aufgrund der Stöchiometrie erforderlich wäre. Die überschüssige Carbonsäure wird jedoch in den Schaumstoff eingelagert und kann eine unerwünschte Veränderung seiner mechanischen Eigenschaften, besonders bei zunehmender Alterung bewirken.

Die Aufgabe der vorliegenden Erfindung bestand darin, die als Treibmittel in großem Umfange eingesetzten Fluorchlorkohlenwasserstoffe bei der Herstellung von PU- und PU-PIR-Hartschaumstoffen zu reduzieren oder möglichst vollständig durch andere Treibgase zu ersetzen. Die mechanischen Eigenschaften der hergestellten Hartschaumstoffe sollten Fluorchlorkohlenwasser enthaltenden Schaumstoffen zumindest entsprechen oder bessere Werte aufweisen.

Diese Aufgabe konnte überraschenderweise gelöst werden durch die Verwendung von organischen Carbonsäuren als Treibmittel in Verbindung mit Polyisocyanuratkatalysatoren als Katalysatoren.

Gegenstand der Erfindung ist somit ein Verfahren zur Herstellung von Urethangruppen oder Urethan- und Isocyanuratgruppen enthaltenden Hartschaumstoffen durch Umsetzung von

a) organischen und/oder modifizierten organischen Polyisocyanaten mit

b) mindestens einer höhermolekularen Verbindung mit mindestens zwei reaktiven Wasserstoffatomen und gegebenenfalls

c) niedermolekularen Kettenverlängerungs- und/oder Vernetzungsmitteln

in Gegenwart von

d) Treibmitteln,

e) Katalysatoren und gegebenenfalls

f) Hilfsmitteln und/oder Zusatzstoffen,

das dadurch gekennzeichnet ist, daß man verwendet als

Treibmittel (d) mindestens eine organische Carbonsäure, vorzugsweise aliphatische Monocarbonsäuren mit einem Molekulargewicht von 60 bis 300 und insbesondere Essigsäure und als Katalysatoren (e) Polyisocyanuratkatalysatoren, vorzugsweise Alkalisalze oder Ammoniumsalze von organischen Carbonsäuren oder Tris(dialkylaminoalkyl)-s-hexahydrotriazine.

Bei der erfindungsgemäßen Verwendung von Polyisocyanuratkatalysatoren und organischen Carbonsäuren zur Herstellung von PU- oder PU-PIR-Hartschaumstoffen zeigte sich überraschenderweise, daß mehr Kohlendioxid als Treibgas gebildet wird als aufgrund der stöchiometrischen Carbonsäure-Isocyanatreaktion zu erwarten ist. Bei Verwendung von Essigsäure als organischer Monocarbonsäure entspricht die Kohlendioxidausbeute mindestens dem theoretischen Wert oder ist um bis zu ungefähr 25 Vol.% größer als aufgrund der stöchiometrischen Rechnung zu erwarten ist. Nach dem erfindungsgemäßen Verfahren können somit bei alleiniger Verwendung von Essigsäure, d.h. aus im wesentlichen wasserfreien Formulierungen und in Abwesenheit von physikalisch wirkenden Treibmitteln, zur Bildung von Kohlendioxid als Treibgas PU- oder PU-PIR-Hartschaumstoffe mit einer Dichte von 0,028 $g/cm^3$ und höher hergestellt

werden.

Vorteilhaft ist ferner, daß durch den Zusatz der organischen Carbonsäuren das Fließverhalten der Reaktionsmischung zur Bildung der Schaumstoffe verbessert wird. Bei gleicher Fließlänge ist z.B. eine mit Essigsäure getriebene Formulierung im Gasausstoß einer mit Trichlorfluormethan getriebenen Formulierung deutlich überlegen. Der Zusatz der organischen Carbonsäuren vermindert die Schrumpfneigung der hergestellten Hartschaumstoffe und bewirkt, im Gegensatz zu Wasser, keine Verschlechterung der Flammwidrigkeit in Gegenwart von Flammschutzmitteln.

Zur Herstellung der PU- oder PU-PIR-Hartschaumstoffe nach dem erfindungsgemäßen Verfahren finden, mit Ausnahme der organischen Carbonsäuren und Polyisocyanuratkatalysatoren, die an sich bekannten Aufbaukomponenten Verwendung, zu denen im einzelnen folgendes auszuführen ist.

a) Als organische Polyisocyanate kommen die an sich bekannten aliphatischen, cycloaliphatischen, araliphatischen und vorzugsweise aromatischen mehrwertigen Isocyanate in Frage.

Im einzelnen seien beispielhaft genannt: Alkylendiisocyanate mit 4 bis 12 Kohlenstoffatomen im Alkylenrest, wie 1,12-Dodecan-diisocyanat, 2-Ethyl-tetramethylen-diisocyanat-1,4, 2-Methylpentamethylen-diisocyanat-1,5, Tetramethylen-diisocyanat-1,4 und vorzugsweise Hexamethylendiisocyanat-1,6; cycloaliphatische Diisocyanate, wie Cyclohexan-1,3- und -1,4-diisocyanat sowie beliebige Gemische dieser Isomeren, 1-Isocyanato-3,3,5-trimethyl-5-isocyanatomethyl-cyclohexan (Isophoron-diisocyanat), 2,4- und 2,6-Hexahydrotoluylen-diisocyanat sowie die entsprechenden Isomerengemische, 4,4'-, 2,2'- und 2,4'-Dicyclohexylmethan-diisocyanat sowie die entsprechenden Isomerengemische und vorzugsweise aromatischen Di- und Polyisocyanate, wie z.B. 2,4- und 2,6-Toluylen-diisocyanat und die entsprechenden Isomerengemische, 4,4'-, 2,4'- und 2,2'-Diphenylmethan-diisocyanat und die entsprechenden Isomerengemische, Mischungen aus 4,4'- und 2,4'-Diphenylmethan-diisocyanaten, Polyphenyl-polymethylen-polyisocyanate, Mischungen aus 4,4'-, 2,4'- und 2,2'-Diphenylmethan-diisocyanaten und Polyphenyl-polymethylen-polyisocyanaten (Roh-MDI) und Mischungen aus Roh-MDI und Toluylen-diisocyanaten. Die organischen Di- und Polyisocyanate können einzeln oder in Form von Mischungen eingesetzt werden.

Häufig werden auch sogenannte modifizierte mehrwertige Isocyanate, d.h. Produkte, die durch partielle chemische Umsetzung organischer Di- und/oder Polyisocyanate erhalten werden, verwendet. Beispielhaft genannt seien Ester-, Harnstoff-, Biuret-, Allophanat-, Carbodiimid-, Isocyanurat- und/oder Urethangruppen enthaltende Di- und/oder Polyisocyanate. Im einzelnen kommen beispielsweise in Betracht: Urethangruppen enthaltende organische, vorzugsweise aromatische Polyisocyanate mit NCO-Gehalten von 33,6 bis 15 Gew.-%, vorzugsweise von 31 bis 21 Gew.-%, bezogen auf das Gesamtgewicht, beispielsweise mit niedermolekularen Diolen, Triolen, Dialkylenglykolen, Trialkylenglykolen oder Polyoxyalkylenglykolen mit Molekulargewichten bis 1500 modifiziertes 4,4'-Diphenylmethan-diisocyanat oder 2,4- bzw. 2,6-Toluylen-diisocyanat, wobei als Di- bzw. Polyoxyalkylen-glykole, die einzeln oder als Gemische eingesetzt werden können; beispielsweise genannt seien: Diethylen-, Dipropylen-glykol, Polyoxyethylen-, Polyoxypropylen- und Polyoxypropylen-polyoxyethylen-glykole oder -triole. Geeignet sind auch NCO-Gruppen enthaltende Prepolymere mit NCO-Gehalten von 25 bis 9 Gew.-%, vorzugsweise von 21 bis 14 Gew.-%, bezogen auf das Gesamtgewicht, hergestellt aus den nachfolgend beschriebenen Polyester-und/oder vorzugsweise Polyether-polyolen und 4,4'-Diphenylmethan-diisocyanat, Mischungen aus 2,4'- und 4,4'-Diphenylmethan-diisocyanat, 2,4- und/oder 2,6-Toluylen-diisocyanaten oder Roh-MDI. Bewährt haben sich ferner flüssige, Carbodiimidgruppen und/oder Isocyanuratringe enthaltende Polyisocyanate mit NCO-Gehalten von 33,6 bis 15, vorzugsweise 31 bis 21 Gew.-%, bezogen auf das Gesamtgewicht, z.B. auf Basis von 4,4'-, 2,4'- und/oder 2,2'-Diphenylmethan-diisocyanat und/oder 2,4- und/oder 2,6-Toluylen-diisocyanat.

Die modifizierten Polyisocyanate können miteinander oder mit unmodifizierten organischen Polyisocyanaten wie z.B. 2,4'-, 4,4'-Diphenylmethan-diisocyanat, Roh-MDI, 2,4- und/oder 2,6-Toluylen-diisocyanat gegebenenfalls gemischt werden.

Besonders bewährt haben sich als organische Polyisocyanate und kommen daher vorzugsweise zur Anwendung zur Herstellung der PU-Hartschaumstoffe: Mischungen aus Toluylen-diisocyanaten und Roh-MDI oder Mischungen aus modifizierten Urethangruppen enthaltenden organischen Polyisocyanaten mit einem NCO-Gehalt von 33,6 bis 15 Gew.-%, insbesondere solchen auf Basis von Toluylen-diisocyanaten, 4,4'-Diphenylmethan-diisocyanat, Diphenylmethan-diisocyanat-Isomerengemischen oder Roh-MDI und insbesondere Roh-MDI mit einem Diphenylmethan-diisocyanat-Isomerengehalt von 30 bis 80 Gew.-%, vorzugsweise von 30 bis 55 Gew.-%.

b) Als höhermolekulare Verbindungen mit mindestens zwei reaktiven Wasserstoffatomen (b) kommen vorzugsweise Polyhydroxylverbindungen mit einer Funktionalität von 2 bis 8, vorzugsweise von 3 bis 8 und einer Hydroxylzahl von 150 bis 850, vorzugsweise von 200 bis 600, in Betracht.

Beispielhaft genannt seien Polythioether-polyole, Polyesteramide, hydroxylgruppenhaltige Polyacetale, hydroxylgruppenhaltige aliphatische Polycarbonate und vorzugsweise Polyester-polyole und Polyether-polyole. Anwendung finden auch Mischungen aus mindestens zwei der genannten Polyhydroxylverbindungen, sofern diese eine durchschnittliche Hydroxylzahl im vorgenannten Bereich aufweisen.

Geeignete Polyester-polyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäuremono- oder -diester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei- und mehrwertige Alkohole, insbesondere Diole sind: Ethandiol, Diethylenglykol, 1,2- bzw. 1,3-Propandiol, Dipropylenglykol, 1,4-Butandiol, 1,5-Pentandiol, 1,6-Hexandiol, 1,10-Decandiol, Glycerin und Trimethylolpropan, Vorzugsweise verwendet werden Ethandiol, Diethylenglykol, 1,4-Butandiol, 1,5-Pentandiol, 1,6-Hexandiol oder Mischungen aus mindestens zwei der genannten Diole, insbesondere Mischungen aus 1,4-Butandiol, 1,5-Pentandiol und 1,6-Hexandiol. Eingesetzt werden können ferner Polyester-polyole aus Lactonen, z.B. $\epsilon$-Caprolacton oder Hydroxycarbonsäuren, z.B. $\omega$-Hydroxycapronsäure.

Zur Herstellung der Polyester-polyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgasen, wie z.B. Stickstoff, Kohlendioxid, Helium, Argon u.a. in der Schmelze bei Temperaturen von 150 bis 250°C, vorzugsweise 180 bis 220°C gegebenenfalls unter vermindertem Druck bis zu der gewünschten Säurezahl, die vorteilhafterweise kleiner als 10, vorzugsweise kleiner als 2 ist, polykondensiert werden. Nach einer bevorzugten Ausführungsform wird das Veresterungsgemisch bei den obengenannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol, zur azeotropen Abdestillation des Kondensationswassers durchgeführt werden.

Zur Herstellung der Polyester-polyole werden die organischen Polycarbonsäuren und/oder -derivate und mehrwertigen Alkohole vorteilhafterweise im Molverhältnis von 1:1 bis 1,8, vorzugsweise 1:1,05 bis 1,2 polykondensiert.

Die erhaltenen Polyester-polyole besitzen vorzugsweise eine Funktionalität von 2 bis 3 und eine Hydroxylzahl von 150 bis 400 und insbesondere von 200 bis 300.

Insbesondere als Polyhydroxylverbindungen verwendet werden jedoch Polyether-polyole, die nach bekannten Verfahren, beispielsweise durch anionische Polymerisation mit Alkalihydroxiden, wie Natrium- oder Kaliumhydroxid, oder Alkalialkoholaten, wie Natriummethylat, Natriumoder Kaliumethylat oder Kaliumisopropylat, als Katalysatoren und mindestens einem Startermolekül, das 2 bis 8, vorzugsweise 3 bis 8 reaktive Wasserstoffatome gebunden enthält, oder durch kationische Polymerisation mit Lewis-Säuren, wie Antimonpentachlorid, Borfluorid-Etherat u.a., oder Bleicherde als Katalysatoren aus einem oder mehreren Alkylenoxiden mit 2 bis 4 Kohlenstoffatomen im Alkylenrest hergestellt werden.

Geeignete Alkylenoxide sind beispielsweise Tetrahydrofuran, 1,3-Propylenoxid, 1,2- bzw. 2,3-Butylenoxid, Styroloxid und vorzugsweise Ethylenoxid und 1,2-Propylenoxid. Die Alkylenoxide können einzeln, alternierend nacheinander oder als Mischungen verwendet werden. Als Startermoleküle kommen beispielsweise in Betracht: Wasser, organische Dicarbonsäuren, wie Bernsteinsäure, Adipinsäure, Phthalsäure und Terephthalsäure, aliphatische und aromatische, gegebenenfalls N-mono-, N,N- und N,N'-dialkylsubstituierte Diamine mit 1 bis 4 Kohlenstoffatomen im Alkylrest, wie gegebenenfalls mono- und dialkylsubstituiertes Ethylendiamin, Diethylentriamin, Triethylentetramin, 1,3-Propylendiamin, 1,3- bzw. 1,4-Butylendiamin, 1,2-, 1,3-, 1,4-, 1,5- und 1,6-Hexamethylendiamin, Phenylendiamine, 2,3-, 2,4- und 2,6-Toluylendiamin und 4,4'-, 2,4'- und 2,2'-Diamino-diphenylmethan.

Als Startermoleküle kommen ferner in Betracht: Alkanolamine, wie Ethanolamin, Diethanolamin, N-Methyl- und N-Ethyl-ethanolamin, N-Methyl- und N-Ethyl-diethanolamin und Triethanolamin und Ammoniak. Vorzugsweise verwendet werden mehrwertige, z.B. zwei- oder insbesondere drei- und/oder höherwertige Alkohole, wie Ethandiol, Propandiol-1,2 und -1,3, Diethylenglykol, Dipropylenglykol, Butandiol-1,4, Hexandiol-1,6, Glycerin, Trimethylol-propan, Pentaerythrit, Sorbit und Sucrose.

Die Polyether-polyole besitzen eine Funktionalität von vorzugsweise 3 bis 8 und insbesondere 3 und 6 und Hydroxylzahlen von vorzugsweise 200 bis 850 und insbesondere von 300 bis 600.

Als Polyether-polyole eignen sich ferner Melamin-Polyether-polyol-Dispersionen gemäß EP-A-23 987 (US-A-4 293 657), Polymer-Polyether-polyol-Dispersionen, hergestellt aus Polyepoxiden und Epoxidharzhärtern in Gegenwart von Polyether-polyolen gemäß DE 29 43 689 (US 43 05 861), Dispersionen von aromatischen Polyestern in Polyhydroxylverbindungen gemäß EP-A-62 204 (US-A-44 35 537) oder DE-A 33 00 474, Dispersionen von organischen und/oder anorganischen Füllstoffen in Polyhydroxylverbindungen gemäß EP-A-11 751 (US 42 43 755), Polyharnstoff-Polyether-polyol-Dispersion gemäß DE-A-31 25 402, Tris-(hydroxyalkyl)isocyanurat-Polyether-polyol-Dispersionen gemäß EP-A-136 571 (US 4 514 526) und Kristallitsuspensionen gemäß DE-A-33 42 176 und DE-A-33 42 177 (US 45 60 708), wobei die Ausführungen in den genannten Patentveröffentlichungen als Bestandteil der Patentbeschreibung zu betrachten sind.

Die Polyether-polyole können ebenso wie die Polyester-polyole einzeln oder in Form von Mischungen verwendet werden. Ferner können sie mit den obengenannten Dispersionen, Suspensionen oder Polyester-polyolen sowie den hydroxylgruppenhaltigen Polyesteramiden, Polyacetalen und/oder Polycarbonaten gemischt werden.

Als hydroxylgruppenhaltige Polyacetale kommen z.B. die aus Glykolen, wie Diethylenglykol, Triethylenglykol, 4,4'-Dihydroxyethoxy-diphenyldimethylmethan, Hexandiol und Formaldehyd herstellbaren Verbindungen in Frage. Auch durch Polymerisation cyclischer Acetale lassen sich geeignete Polyacetale herstellen.

Als Hydroxylgruppen aufweisende Polycarbonate kommen solche der an sich bekannten Art in Betracht, die beispielsweise durch Umsetzung von Diolen, wie Propandiol-(1,3), Butandiol-(1,4) und/oder Hexandiol-(1,6), Diethylenglykol, Triethylenglykol oder Tetraethylenglykol mit Diarylcarbonaten, z.B. Diphenylcarbonat, oder Phosgen hergestellt werden können.

Zu den Polyesteramiden zählen z.B. die aus mehrwertigen gesättigten und/oder ungesättigten Carbonsäuren bzw. deren Anhydriden und Aminoalkoholen oder Mischungen aus mehrwertigen Alkoholen und Aminoalkoholen und/oder Polyaminen gewonnenen, vorwiegend linearen Kondensate.

Als Polyhydroxylverbindungen besonders bewährt haben sich und daher vorzugsweise verwendet werden Mischungen, die bezogen auf 100 Gew.-Teile, zweckmäßigerweise enthalten:

bi) 0 bis 95 Gew.-Teile, vorzugsweise 20 bis 80 Gew.-Teile eines mit Sucrose gestarteten Polyether-polyols mit einer Hydroxylzahl von 300 bis 500, vorzugsweise 350 bis 450 auf der Grundlage von 1,2-Propylenoxid oder 1,2-Propylenoxid und Ethylenoxid,

bii) 0 bis 15 Gew.-Teile, vorzugsweise 5 bis 15 Gew.-Teile eines mit Sorbit gestarteten Polyether-polyols mit einer Hydroxylzahl von 400 bis 600, vorzugsweise von 450 bis 550 auf der Grundlage von 1,2-Propylenoxid oder 1,2-Propylenoxid und Ethylenoxid,

biii) 0 bis 20 Gew.-Teile, vorzugweise 5 bis 15 Gew.-Teile eines mit Ethylendiamin gestarteten Polyether-polyols mit einer Hydroxylzahl von 700 bis 850, vorzugsweise von 750 bis 800 auf der Grundlage von 1,2-Propylenoxid

und

biiii) 0 bis 60 Gew.-Teile, vorzugsweise 5 bis 40 Gew.-Teile eines Polyether-polyols mit einer Hydroxylzahl von 400 bis 600, vorzugsweise von 450 bis 550 auf Basis von 1,2-Propylenoxid oder 1,2-Propylenoxid und Ethylenoxid, hergestellt unter Verwendung einer Mischung aus Sucrose und Triethanolamin im Gewichtsverhältnis von 1:2 bis 2:1 als Startermoleküle.

c) Die PU- oder PU-PIR-Hartschaumstoffe können ohne oder unter Mitverwendung von Kettenverlängerungs- und/oder Vernetzungsmitteln hergestellt werden. Zur Modifizierung der mechanischen Eigenschaften kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel verwendet werden, vorzugsweise Alkanolamine und insbesondere Diole und/oder Triole mit Molekulargewichten kleiner als 400, vorzugsweise von 60 bis 300. In Betracht kommen beispielsweise Alkanolamine, wie z.B. Trialkanolamine wie z.B. Triethanolamin, Triisopropanolamin und die Additionsprodukte aus Ethylenoxid oder 1,2-Propylenoxid und Alkylendiaminen mit 2 bis 6 C-Atomen im Alkylenrest wie z.B. N,N,N',N'-Tetra(2-hydroxyethyl)ethylendiamin und N,N,N',N'-Tetra(2-hydroxypropyl)ethylendiamin, aliphatische, cycloaliphatische und/oder araliphatische Diole mit 2 bis 14, vorzugsweise 4 bis 10 Kohlenstoffatomen, wie z.B. Ethylenglykol, Propandiol-1,3, Decandiol-1,10, o-, m-, p-Dihydroxycyclohexan, Diethylenglykol, Dipropylenglykol und vorzugsweise Butandiol-1,4, Hexandiol-1,6 und Bis-(2-hydroxyethyl)-hydrochinon, Triole, wie 1,2,4-, 1,3,5-Trihydroxy-cyclohexan, Glycerin und Trimethylolpropan und niedermolekulare hydroxylgruppenhaltige Polyalkylenoxide auf Basis Ethylen- und/oder 1,2-Propylenoxid und aromatischen Diaminen, wie z.B. Toluylen-diaminen und/oder Diaminodiphenylmethanen sowie den vorgenannten Alkanolaminen, Diolen und/oder Triolen als Startermoleküle. Sofern zur Herstellung der PU- oder PU-PIR-Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der Polyhydroxylverbindung zum Einsatz.

d) Als Treibmittel zur Herstellung der PU- oder PU-PIR-Hartschaumstoffe finden erfindungsgemäß organische Carbonsäuren Verwendung, die bei der Reaktion mit den Polyisocyanaten Kohlendioxid als Treibgas bilden. Die organischen Carbonsäuren werden vorzugsweise als alleiniges Treibmittel verwendet. Da jedoch bei der Kohlendioxidbildung zusätzlich Acylharnstoffe entstehen, kann es zur Erzielung von Hartschaumstoffen mit speziellen mechanischen Eigenschaften zweckmäßig sein, die organischen Carbonsäuren in Verbindung mit Wasser oder physikalisch wirkenden, inerten Treibmitteln oder Mischungen aus Wasser und physikalisch wirkenden, inerten Treibmitteln zu verwenden. Hierbei reicht vielfach die in den Polyether- und Polyester-polyolen aus ihrer Herstellung enthaltene Wassermenge aus, so daß es keines weiteren Zusatzes bedarf.

Als organische Carbonsäuren finden vorteilhafterweise aliphatische Mono- und Polycarbonsäuren, z.B. Dicarbonsäuren, Verwendung. Geeignet sind jedoch andere organische Mono- und Polycarbonsäuren. Die organischen Carbonsäuren können gegebenenfalls auch unter den Reaktionsbedingungen der Schaumstoffherstellung inerte oder mit Isocyanaten reaktionsfähige Substituenten gebunden enthalten und/oder olefinisch ungesättigte Gruppen aufweisen. Als chemisch inerte Substituenten seien beispielsweise Halogenatome, wie z.B. Fluor- und/oder Chloratome, und Alkylreste, wie z.B. Methyl- oder Ethylreste, genannt. Zweckmäßigerweise besitzen die substituierten organischen Carbonsäuren mindestens eine weitere gegenüber Isocyanaten reaktionsfähige Gruppe wie z.B. Mercaptogruppen, primäre und/oder sekundäre Aminogruppen und vorzugsweise primäre und/oder sekundäre Hydroxylgruppen.

In Betracht kommen somit gegebenenfalls substituierte Monocarbonsäuren wie z.B. Essigsäure, Propionsäure, 2-Chlorpropionsäure, 3-Chlorpropionsäure, 2,2-Dichlorpropionsäure, Hexansäure, 2-Ethylhexansäure, Cyclohexancarbonsäure, Dodecansäure, Palmitinsäure, Stearinsäure, Ölsäure, 3-Mercaptopropionsäure, Glycolsäure, 3-Hydroxypropionsäure, Milchsäure, Ricinolsäure, 2-Aminopropionsäure, Benzoesäure, 4-Methylbenzoesäure, Salicylsäure und Antranilsäure und gegebenenfalls substituierte Polycarbonsäuren, vorzugsweise Dicarbonsäuren wie z.B. Oxalsäure, Malonsäure, Bernsteinsäure, Fumarsäure, Maleinsäure, Glutarsäure, Adipinsäure, Sebacinsäure, Dodecandisäure, Weinsäure, Phthalsäure, Isophthalsäure und Zitronensäure. Die Mono- und/oder Polycarbonsäuren können einzeln oder in Form von Mischungen verwendet werden. Kristalline Carbonsäuren oder solche mit einer geringen Löslichkeit in den Aufbaukomponenten zur Herstellung der Hartschaumstoffe werden zweckmäßigerweise in Verbindung mit Wasser und/oder Kettenverlängerungsmitteln, wie Dipropylenglykol verwendet.

Als Treibmittel (d) vorzugsweise eingesetzt werden aliphatische Monocarbonsäuren mit einem Molekulargewicht von 46 bis 300 und insbesondere von 60 bis 135, z.B. Essigsäure, Propionsäure und 2-Ethylhexansäure und insbesondere Essigsäure.

Wie bereits ausgeführt wurde, können zusätzlich zu den organischen Carbonsäuren oder Mischungen aus organischen Carbonsäuren und Wasser physikalisch wirkende Treibmittel eingesetzt werden. Geeignete Treibmittel der genannten Art können beispielsweise ausgewählt werden aus der Gruppe der Alkane, Cycloalkane mit bis zu 6 Kohlenstoffatomen, vorzugsweise 5 oder 6 Kohlenstoffatomen, Dialkylether, Cycloalkylenether und Fluoralkane. Verwendbar sind auch Mischungen aus mindestens zwei Verbindungen der genannten Verbindungsgruppen. Beispielhaft genannt seien im einzelnen: Alkane, wie z.B. Propan, n-Butan oder Isobutan, Cycloalkane, wie z.B. Cyclobutan und vorzugsweise Cyclopentan und Cyclohexan, Dialkylether, wie z.B. Dimethylether, Methylethylether oder Diethylether, Cycloalkylenether, wie z.B. Furan, und Fluoralkane, die in der Troposphäre abgebaut werden und deshalb für die Ozonschicht unschädlich sind, wie z.B. Trifluormethan, Difluormethan, Difluorethan, Tetrafluorethan und Heptafluorpropan.

Die Gesamtmenge der eingesetzten Treibmittel richtet sich nach der gewünschten Dichte der Hartschaumstoffe. Im allgemeinen werden die Carbonsäuren oder Carbonsäuremischungen in einer Menge von 0,5 bis 30 Gew.-Teilen, vorzugsweise von 1 bis 15 Gew.-Teilen und insbesondere von 1 bis 8 Gew.-Teilen, bezogen auf 100 Gew.-Teile der höhermolekularen Verbindungen mit mindestens zwei reaktiven Wasserstoffatomen (b) verwendet. Sofern Wasser und/oder physikalisch wirkende Treibmittel überhaupt mitverwendet werden, kommen sie in untergeordneten Mengen, z.B. in Mengen unter 50

Gew.%, bezogen auf das Gesamtgewicht der Treibmittelmischung, zur Anwendung. Eingesetzt werden können beispielsweise 0 bis 5 Gew.-Teile, vorzugsweise 0 bis 3 Gew.-Teile und insbesondere 0 bis 2 Gew.-Teile Wasser und/oder 0 bis 30 Gew.-Teile, vorzugsweise 0 bis 20 Gew.-Teile und insbesondere 0 bis 15 Gew.-Teile eines oder mehrerer physikalisch wirkender Treibmittel, bezogen auf 100 Gew.-Teile der höhermolekularen Verbindungen mit mindestens zwei reaktiven Wasserstoffatomen (b).

e) Wesentlich für die Herstellung der PU- und PU-PIR-Hartschaumstoffe nach dem erfindungsgemäßen Verfahren ist die Durchführung der Reaktion in Gegenwart von Polyisocyanuratkatalysatoren. Als geeignete Polyisocyanuratkatalysatoren haben sich Alkalisalze z.B. Natrium- und vorzugsweise Kalium- und Ammoniumsalze von organischen Carbonsäuren, zweckmäßigerweise mit 1 bis 8 Kohlenstoffatomen, vorzugsweise 1 oder 2 Kohlenstoffatomen, wie z.B. die Salze der Ameisen-, Essig-, Propion- oder Octansäure, und Tris(dialkylaminoalkyl)-s-hexahydrotriazine, wie z.B. Tris(dimethylaminoethyl)-, Tris-(dimethylaminopropyl)-, Tris(dimethylaminobutyl)- und die entsprechenden Tris(diethylaminoalkyl)-s-hexahydrotriazine besonders bewährt. Insbesondere Anwendung finden jedoch (Trimethyl-2-hydroxypropyl)-ammoniumformiat, (Trimethyl-2-hydroxypropyl)ammoniumoctanoat, Kaliumacetat, Kaliumformiat und Tris-(dimethylaminopropyl)-s-hexahydrotriazin als Polyisocyanuratkatalysatoren. Die geeigneten Polyisocyanuratkatalysatoren werden üblicherweise in einer Menge von 1 bis 10 Gew.-Teilen, vorzugsweise 1,5 bis 8 Gew.-Teilen, bezogen auf 100 Gew.-Teile der höhermolekularen Verbindungen mit mindestens zwei reaktiven Wasserstoffatomen (b) verwendet.

Zur Herstellung der PU- und PU-PIR-Hartschaumstoffe insbesondere bewährt hat sich der Einsatz von mindestens einer aliphatischen Monocarbonsäure, ausgewählt aus der Gruppe Essigsäure, Propionsäure und 2-Ethylhexansäure als Treibmittel (d) in Verbindung mit mindestens einem Polyisocyanuratkatalysator ausgewählt aus der Gruppe (Trimethyl-2-hydroxypropyl)ammoniumoctanoat, -formiat, Kaliumacetat, Kaliumformiat und Tris(dialkylaminoalkyl)-s-hexahydrotriazin als Katalysator (e).

Zusätzlich zu den erfindungsgemäß erforderlichen Polyisocyanuratkatalysatoren können andere Verbindungen als Katalysatoren mitverwendet werden, die die Reaktion der Hydroxylgruppen enthaltenden Verbindungen der Komponente (b) und gegebenenfalls (c) mit den gegebenenfalls modifizierten Polyisocyanaten stark beschleunigen. In Betracht kommen beispielsweise organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat und tertiäre Amine, wie z.B. Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin oder -hexandiamin, Pentamethyl-diethylentriamin, Tetramethyl-diaminoethylether, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl-und N-Ethyl-diethanolamin und Dimethylethanolamin.

f) Der Reaktionsmischung zur Herstellung der PU- oder PU-PIR-Hartschaumstoffe können gegebenenfalls auch noch Hilfsmittel und/oder Zusatzstoffe (f) einverleibt werden. Genannt seien beispielsweise oberflächenaktive Substanzen, Schaumstabilisatoren, Zellregler, Füllstoffe, Farbstoffe, Pigmente, Flammschutzmittel, Hydrolyseschutzmittel, fungistatische und bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten, oder von Fettsäuren sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnußöl und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Polyacrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), angewandt.

Als Füllstoffe, insbesondere verstärkend wirkende Füllstoffe, sind die an sich bekannten, üblichen organischen und anorganischen Füllstoffe, Verstärkungsmittel, Beschwerungsmittel, Mittel zur Verbesserung des Abriebverhaltens in Anstrichfarben, Beschichtungsmittel usw. zu verstehen. Im einzelnen seien beispielhaft genannt: anorganische Füllstoffe wie silikatische Mineralien, beispielsweise Schichtsilikate wie Antigorit, Serpentin, Hornblenden, Amphibole, Chrisotil, Talkum; Metalloxide, wie Kaolin, Aluminiumoxide, Aluminiumsilikat, Titanoxide und Eisenoxide, Metallsalze wie Kreide, Schwerspat und anorganische Pigmente, wie Cadmiumsulfid, Zinksulfid sowie Glaspartikel. Als organische Füllstoffe kommen beispielsweise in Betracht: Ruß, Melamin, Kollophonium, Cyclopentadienylharze und Pfropfpolymerisate.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), einverleibt.

Geeignete Flammschutzmittel sind beispielsweise Diphenylkresylphosphat, Trikresylphosphat, Tris-(2-chlorethyl)phosphat, Tris-(2-chlorpropyl)phosphat, Tris(1,3-dichlorpropyl)phosphat, Tris-(2,3-dibrompropyl)phosphat, Tetrakis-(2-chlorethyl)-ethylendiphosphat, Dimethylmethanphosphonat, Diethanolaminomethylphosphonsäurediethylester sowie handelsübliche halogenhaltige Flammschutzpolyole.

Außer den bereits genannten halogensubstituierten Phosphaten können auch anorganische Flammschutzmittel, wie roter Phosphor, Aluminiumoxidhydrat, Antimontrioxid, Arsenoxid, Ammoniumpolyphosphat und Calciumsulfat oder Blähgraphit und Cyanursäurederivate, wie z.B. Melamin oder Mischungen aus mindestens zwei Flammschutzmitteln, wie z.B. Ammoniumpolyphosphaten und Melamin sowie gegebenenfalls Stärke zum Flammfestmachen der erfindungsgemäß hergestellten PU- oder PU-PIR-Hartschaumstoffe verwendet werden. Im allgemeinen hat es sich als zweckmäßig erwiesen, 5 bis 50 Gew.-Teile, vorzugsweise 5 bis 25 Gew.-Teile der genannten Flammschutzmittel oder -mischungen für jeweils 100 Gew.-Teile der Komponenten (a) bis (c) zu verwenden.

Nähere Angaben über die oben genannten anderen üblichen Hilfs- und Zusatzstoffe sind der Fachliteratur, beispielsweise der Monographie von J.H. Saunders und K.C. Frisch "High Polymers" Band XVI, Polyurethanes, Teil 1 und 2, Verlag Interscience Publishers 1962 bzw. 1964, oder dem Kunststoff-Handbuch, Polyurethane, Band VII, Carl-Hanser-Verlag, München, Wien, 1. und 2. Auflage, 1966 und 1983 zu entnehmen.

Zur Herstellung der PU-Hartschaumstoffe werden die organischen, gegebenenfalls modifizierten Polyisocyanate (a), die höhermolekularen Verbindungen mit mindestens zwei reaktiven Wasserstoffatomen (b), die organischen Carbonsäuren (d) und gegebenenfalls Kettenverlängerungsmittel und/oder Vernetzungsmittel (c) in solchen Mengen zur Umsetzung gebracht, daß die Isocyanatkennzahl, die das Äquivalenz-Verhältnis von NCO-Gruppen der Polyisocyanate (a) zur Summe der reaktiven Wasserstoffatome der Komponenten (b), (d) und gegebenenfalls (c) beschreibt, in dem Bereich von 90 bis 500, vorzugsweise von 100 bis 400 und insbesondere 115 bis 300 liegt. Sofern die Urethangruppen enthaltenden Hartschaumstoffe durch die Bildung von Isocyanuratgruppen modifiziert werden, beispielsweise zur Erhöhung der Flammwidrigkeit, wird üblicherweise eine Isocyanatkennzahl von bis zu 1500, vorzugsweise von 300 bis 1200 und insbesondere von 500 bis 1000 angewandt.

Die PU- oder PU-PIR-Hartschaumstoffe können diskontinuierlich oder kontinuierlich nach dem Prepolymer- oder vorzugsweise nach dem one shot-Verfahren mit Hilfe bekannter Mischvorrichtungen hergestellt werden.

Als besonders vorteilhaft hat es sich erwiesen, nach dem Zweikomponenten-Verfahren zu arbeiten und die Aufbaukomponente (b), (d), (e) und gegebenenfalls (c) und (f) in der Komponente (A) zu vereinigen und als Komponente (B) die organischen Polyisocyanate, modifizierten Polyisocyanate (a) oder Mischungen aus den genannten Polyisocyanaten zu verwenden.

Die Ausgangskomponenten werden bei einer Temperatur von 15 bis 90 °C, vorzugsweise von 20 bis 65 °C und insbesondere von 20 bis 35 °C gemischt und in ein offenes, gegebenenfalls temperiertes Formwerkzeug eingebracht, in der man die Reaktionsmischung zur Vermeidung einer verdichteten Randzone im wesentlichen druckfrei aufschäumen läßt. Zur Bildung von Verbundelementen beschichtet man zweckmäßigerweise die Rückseite einer Deckschicht, z.B. durch Begießen oder Besprühen, mit der schaumfähigen Reaktionsmischung und läßt diese aufschäumen und zum PU- oder PU-PIR-Hartschaumstoff aushärten.

Die nach dem erfindungsgemäßen Verfahren hergestellten PU- oder PU-PIR-Hartschaumstoffe besitzen vorteilhafterweise Dichten von 15 bis 100 g/l und vorzugsweise von 28 bis 60 g/l.

Die PU- oder PU-PIR-Hartschaumstoffe finden vorzugsweise Verwendung als wärmedämmende Zwischenschicht in Verbundelementen und zum Ausschäumen von Hohlräumen in Kühlmöbelgehäusen, insbesondere für Kühlschränke und Gefriertruhen, und als Außenmantel von Heißwasserspeichern. Die Produkte eignen sich ferner zur Isolierung von erwärmten Materialien, als Motorabdeckung und als Rohrschalen.

Die in den Beispielen genannten Teile sind Gew.-Teile.

Beispiel 1

A-Komponente: Mischung, bestehend aus

43,5 Teilen eines mit Glycerin gestarteten Polyoxypropylenpolyols mit einem durchschnittlichen Molekulargewicht von 400 (= Polyol A),
43,5 Teilen eines mit Glycerin/Sucrose/Wasser gestarteten Polyoxypropylenpolyols mit einem durchschnittlichen Molekulargewicht von 600 (= Polyol B),
1,0 Teilen einer oberflächenaktiven Substanz auf Silikonbasis (Tegostab® B 8409 der Goldschmidt AG, Essen),
6,0 Teilen Essigsäure und
6,0 Teilen einer 50 gew.%igen Lösung von (Trimethyl-2-hydroxypropyl)ammoniumformiat in Dipropylglykol

B-Komponente:
Mischung, enthaltend 4,4'-, 2,4'- und 2,2'-Diphenylmethan-diisocyanate und Polyphenyl-polymethylen-polyisocyanate (= Roh-MDI)
49 g der A-Komponente und
51 g der B-Komponente
wurden, entsprechend einem NCO-Index von 100, bei 23°C mittels eines hochtourigen Rührers (1500 U/min) intensiv gemischt und die Reaktionsmischung in einen Kunststoffbecher mit einem Volumen von 1,1 l eingefüllt und dort aufschäumen gelassen.

An dem so hergestellten Hartschaumstoff wurden bestimmt: die Start-, Abbinde-, Trocken- und Steigzeit sowie die Kerndichte nach DIN 53 420.

Vergleichsbeispiel I

Man verfuhr analog den Angaben des Beispiels 1, verwendete jedoch in der A-Komponente:

44,0 Teile Polyol A,
44,0 Teile Polyol B,
1,0 Teile Tegostab® B 8409,
6,0 Teile Essigsäure und
5,0 Teile Bis(dimethylaminoethyl)ether

B-Komponente: wie Beispiel 1
Es wurden 49,6 Teile der Komponente A mit 50,4 Teilen der Komponente B in der in Beispiel 1 angegebenen Weise gemischt und aufschäumen gelassen.

An dem auf diese Weise hergestellten Hartschaumstoffe wurden analog den Angaben von Beispiel 1 bestimmt: die Start-, Abbinde- und Trockenzeit sowie die Kerndichte nach DIN 53 420.

Die erhaltenen Ergebnisse sind in Tabelle I zusammengefaßt.

Tabelle I

| | Beispiel 1 | Vergleichsbeispiel I |
|---|---|---|
| Startzeit [s] | 12 | 17 |
| Abbindezeit [s] | 68 | 66 |
| Trockenzeit [s] | 86 | 85 |
| Steigzeit [s] | 115 | - |
| Kerndichte [g/dm$^3$] | 43,5 | 118 |

Bei der Herstellung der PU-Hartschaumstoffe nach Beispiel 1 und Vergleichsbeispiel I wurden nahezu identische Reaktionszeiten ermittelt. Aufgrund der Verwendung des erfindungsgemäß geeigneten Katalysators besaß der PU-Hartschaumstoff nach Beispiel 1 eine deutlich niedrigere Dichte.

Beispiel 2

A-Komponente: Mischung, bestehend aus

44,2 Teilen Polyol A,
44,2 Teilen Polyol B,
1,0 Teilen einer oberflächenaktiven Substanz auf Silikonbasis (Tegostab® B 8409),
7,4 Teilen Propionsäure und
3,2 Teilen einer Lösung von Kaliumacetat in Ethylenglykol

B-Komponente: Roh-MDI
45 g der A-Komponente und
55 g der B-Komponente
entsprechend einem NCO-Index von 115, wurden bei 23 °C mittels eines hochtourigen Rührers (1500 U/min) intensiv gemischt und die Reaktionsmischung in einen Kunststoffbecher mit einem Volumen von 1,1 l eingefüllt und dort aufschäumen gelassen.

Vergleichsbeispiel II

Man verfuhr analog den Angaben des Beispiels 2, verwendete jedoch in der A-Komponente als Aufbaukomponenten:

| | |
|---|---|
| 43,7 Teile | Polyol A, |
| 43,7 Teile | Polyol B, |
| 1,0 Teile | einer oberflächenaktiven Substanz auf Silikonbasis (Tegostab® B 8409), |
| 7,4 Teile | Propionsäure und |
| 4,2 Teile | Triethylendiamin (DABCO® 33 LV von AIR PRODUCTS) |

46 Teile der A-Komponente und 53 Teile der B-Komponente wurden analog den Angaben des Beispiels 2 zur Reaktion gebracht.

Die bei der PU-Hartschaumstoffherstellung gemessenen Reaktionsparameter und die Kerndichte nach DIN 53 420 der erhaltenen Schaumstoffe sind in der Tabelle II zusammengefaßt.

Tabelle II

| | Beispiel 2 | Vergleichsbeispiel II |
|---|---|---|
| Startzeit [s] | 21 | 18 |
| Abbindezeit [s] | 69 | 70 |
| Trockenzeit [s] | 85 | 90 |
| Kerndichte [g/l] | 63 | 80 |

Beispiel 3

A-Komponente: Mischung, bestehend aus

| | |
|---|---|
| 32,0 Teilen | Polyol A, |
| 32,0 Teilen | Polyol B, |
| 0,7 Teilen | einer oberflächenaktiven Substanz auf Silikonbasis (Tegostab® B 8409), |
| 30,0 Teilen | Rizinolsäure und |
| 5,3 Teilen | einer 75 gew.%igen Lösung von Trimethyl-2-hydroxypropylammoniumoctanoat in Dipropylenglykol |

B-Komponente: Roh-MDI
37 Teile der A-Komponente und
63 Teile der B-Komponente
wurden, entsprechend einem NCO-Index von 180, bei 23 °C intensiv gemischt und die Reaktionsmischung in einem Kunststoffbecher aufschäumen gelassen.

Vergleichsbeispiel III

A-Komponente: Mischung, bestehend aus

| | |
|---|---|
| 32,3 Teilen | Polyol A, |
| 32,3 Teilen | Polyol B, |
| 0,7 Teilen | einer oberflächenaktiven Substanz auf Silikonbasis (Tegostab® B 8409), |
| 30,2 Teilen | Rizinolsäure und |
| 4,5 Teilen | N,N,N',N'-Tetramethyl-1,6-hexandiamin |

B-Komponente: Roh-MDI
38 Teile der A-Komponente und
62 Teile der B-Komponente
wurden, entsprechend einem NCO-Index von 180, bei 23 °C intensiv gemischt und die Reaktionsmischung

in einem Kunststoffbecher aufschäumen gelassen.

Die bei der PU-Hartschaumstoffherstellung gemessenen Reaktionsparameter und die Kerndichte nach DIN 53 420 der erhaltenen Schaumstoffe sind in Tabelle III zusammengefaßt.

Tabelle III

| | Beispiel 3 | Vergleichsbeispiel III |
|---|---|---|
| Startzeit [s] | 22 | 15 |
| Abbindezeit [s] | 70 | 67 |
| Trockenzeit [s] | 100 | 95 |
| Kerndichte [g/l] | 52 | 89 |

Beispiel 4

A-Komponente: Mischung, bestehend aus

| | |
|---|---|
| 33,7 Teilen | Polyol A, |
| 33,7 Teilen | Polyol B, |
| 0,8 Teilen | einer oberflächenaktiven Substanz auf Silikonbasis (Tegostab® B 8409), |
| 20,1 Teilen | Tris-(2-chlorethyl)phosphat, |
| 6,0 Teilen | Essigsäure und |
| 5,7 Teilen | einer 50 gew.%igen Lösung von (Trimethyl-2-hydroxypropyl)ammoniumformiat in Dipropylenglykol |

B-Komponente: Roh-MDI

44 Teile der A-Komponente und
56 Teile der B-Komponente
wurden, entsprechend einem NCO-Index von 150, bei 23 °C intensiv gemischt und die Reaktionsmischung in einem Kunststoffbecher aufschäumen gelassen.

Vergleichsbeispiel IV

A-Komponente: Mischung, bestehend aus

| | |
|---|---|
| 34,1 Teilen | Polyol A, |
| 34,1 Teilen | Polyol B, |
| 0,8 Teilen | einer oberflächenaktiven Substanz auf Silikonbasis (Tegostab® B 8409), |
| 20,0 Teilen | Tris-(2-chlorethyl)phosphat, |
| 6,0 Teilen | Essigsäure und |
| 5,0 Teilen | Bis-(dimethylaminoethyl)ether |

B-Komponente: Roh-MDI

46 Teile der A-Komponente und
54 Teile der B-Komponente
wurden, entsprechend einem NCO-Index von 150, intensiv gemischt und die Reaktionsmischung in einem Kunststoffbecher aufgeschäumen gelassen.

Die bei der PU-Hartschaumstoffherstellung gemessenen Reaktionsparameter und die Kerndichte nach DIN 53 420 der erhaltenen Schaumstoffe sind in Tabelle IV zusammengefaßt.

Tabelle IV

| | Beispiel 4 | Vergleichsbeispiel IV |
|---|---|---|
| Startzeit [s] | 8 | 12 |
| Abbindezeit [s] | 70 | 70 |
| Trockenzeit [s] | 85 | 90 |
| Kerndichte [g/l] | 41 | 127 |

Beispiel 5

A-Komponente: Mischung, bestehend aus
28,2 Teilen Polyol A,
28,2 Teilen Polyol B,
0,6 Teilen einer oberflächenaktiven Substanz auf Silikonbasis (Tegostab® B 8409),
10,0 Teilen Flammschutzmittel PHT-4-diol der Fa. Great Lakes,
30,0 Teilen Rizinolsäure und
3,0 Teilen einer Lösung von Kaliumacetat in Ethylenglykol
B-Komponente: Roh-MDI
35 Teile der A-Komponente und
65 Teile der B-Komponente
wurden, entsprechend einem NCO-Index von 200, intensiv gemischt und die Reaktionsmischung in einem Kunststoffbecher aufschäumen gelassen.

Vergleichsbeispiel V

A-Komponente: Mischung, bestehend aus
27,5 Teilen Polyol A,
27,5 Teilen Polyol B,
0,6 Teilen einer oberflächenaktiven Substanz auf Silikonbasis (Tegostab® B 8409),
10,1 Teilen Flammschutzmittel PHT-4-diol der Fa. Great Lakes,
30,0 Teilen Rizinolsäure und
4,3 Teilen N,N,N',N'-Tetramethyl-1,6-hexandiamin
B-Komponente: Roh-MDI
37 g der A-Komponente und
63 g der B-Komponente
wurden, entsprechend einem NCO-Index von 200, bei 23 °C intensiv gemischt und die Reaktionsmischung in einem 1, 1 l-Kunststoffbecher aufschäumen gelassen.

Die bei der PU-Hartschaumstoffherstellung gemessenen Reaktionsparameter und die Kerndichte nach DIN 53 420 der erhaltenen Schaumstoffe sind in Tabelle V zusammengefaßt.

Tabelle V

| | Beispiel 5 | Vergleichsbeispiel V |
|---|---|---|
| Startzeit [s] | 20 | 12 |
| Abbindezeit [s] | 70 | 70 |
| Trockenzeit [s] | 110 | 100 |
| Kerndichte [g/l] | 56 | 93 |

Beispiel 6

A-Komponente: Mischung, bestehend aus
30,0 Teilen Polyol A,
30,0 Teilen Polyol B,
0,7 Teilen einer oberflächenaktiven Substanz auf Silikonbasis (Tegostab® B 8409),
30,1 Teilen Diphenylkresylphosphat,
6,0 Teilen Essigsäure und
3,2 Teilen Tris-(dimethylaminopropyl)-s-hexahydrotriazin
B-Komponente: Roh-MDI
32 g der A-Komponente und
68 g der B-Komponente
wurden, entsprechend einem NCO-Index von 300, intensiv gemischt und die Reaktionsmischung in einen 1,1 l-Becher eingefüllt und dort aufschäumen gelassen.

Vergleichsbeispiel VI

A-Komponente: Mischung, bestehend aus

| | |
|---|---|
| 28,9 Teilen | Polyol A, |
| 28,9 Teilen | Polyol B, |
| 0,7 Teilen | einer oberflächenaktiven Substanz auf Silikonbasis (Tegostab® B 8409), |
| 30,0 Teilen | Diphenylkresylphosphat, |
| 6,0 Teilen | Essigsäure und |
| 5,5 Teilen | Pentamethyldiethylentriamin |

B-Komponente: Roh-MDI

32 Teile der A-Komponente und
68 Teile der B-Komponente
wurden, entsprechend einem NCO-Index von 300, intensiv gemischt und die Reaktionsmischung in einem offenen Becher aufgeschäumen gelassen.

Die bei der PU-Hartschaumstoffherstellung gemessenen Reaktionsparameter und die Kerndichte nach DIN 53 420 der erhaltenen Schaumstoffe sind in Tabelle VI zusammengefaßt.

Tabelle VI

| | Beispiel 6 | Vergleichsbeispiel VI |
|---|---|---|
| Startzeit [s] | 15 | 10 |
| Abbindezeit [s] | 70 | 70 |
| Trockenzeit [s] | 85 | 90 |
| Kerndichte [g/l] | 75 | 87 |

Vergleichsbeispiel VII

A-Komponente: Mischung, bestehend aus

| | |
|---|---|
| 39,8 Teilen | Polyol A, |
| 39,8 Teilen | Polyol B, |
| 0,9 Teilen | einer oberflächenaktiven Substanz auf Silikonbasis (Tegostab® B 8409), |
| 18,0 Teilen | Trichlorfluormethan und |
| 1,5 Teilen | einer 75 %igen Lösung von Trimethyl-2-hydroxypropylammoniumoctanoat in Dipropylenglykol |

B-Komponente: Roh-MDI

49,5 Teile der A-Komponente und
50,5 Teile der B-Komponente
wurden, entsprechend einem NCO-Index von 130, intensiv gemischt und die Reaktionsmischung in einem Becher schäumen gelassen.

Vergleichsbeispiel VIII

A-Komponente: Mischung, bestehend aus

| | |
|---|---|
| 39,2 Teilen | Polyol A, |
| 39,2 Teilen | Polyol B, |
| 0,9 Teilen | einer oberflächenaktiven Substanz auf Silikonbasis (Tegostab® B 8409), |
| 18,0 Teilen | Trichlorfluormethan, |
| 2,7 Teilen | Dimethylcyclohexylamin |

B-Komponente: Roh-MDI

50,4 Teile der A-Komponente und
49,6 Teile der B-Komponente
wurden, entsprechend einem NCO-Index von 130, intensiv gemischt und die Reaktionsmischung in einen Kunststoffbecher eingefüllt und dort aufschäumen gelassen.

Die bei der PU-Hartschaumstoffherstellung nach den Vergleichsbeispielen VII und VIII gemessenen Reaktionsparameter und die Kerndichte nach DIN 53 420 der hergestellten Schaumstoffe sind in Tabelle VII zusammengefaßt.

Tabelle VII

| | Vergleichsbeispiel VII | Vergleichsbeispiel VIII |
|---|---|---|
| Startzeit [s] | 28 | 17 |
| Abbindezeit [s] | 65 | 68 |
| Trockenzeit [s] | 70 | 90 |
| Kerndichte [g/l] | 47 | 44 |

Während in den Beispielen 1 bis 6 die erfindungsgemäß geeigneten Carbonsäuren und die erfindungsgemäß in Betracht kommenden Katalysatoren miteinander kombiniert werden, finden nach den Vergleichsbeispielen I bis VI beliebige Polyurethankatalysatoren Verwendung.

Die Vergleichsbeispiele VII und VIII zeigen, daß bei Einsatz des erfindungsgemäß geeigneten Katalysators (Vergleichsbeispiel VII) bzw. eines üblichen Polyurethankatalysators bei Abwesenheit der Carbonsäure kein positiver Effekt auf die Treibreaktion entsteht.

Vielmehr zeigen die erfindungsgemäßen Katalysatoren in Abwesenheit der Carbonsäure den gegenteiligen Effekt, d.h. es werden PU-Hartschaumstoffe mit einer höheren Kerndichte gebildet (Vergleichsbeispiel VII).

## Patentansprüche

1. Verfahren zur Herstellung von Urethangruppen oder Urethan- und Isocyanuratgruppen enthaltenden Hartschaumstoffen durch Umsetzung von
   a) organischen und/oder modifizierten organischen Polyisocyanaten mit
   b) mindestens einer höhermolekularen Verbindung mit mindestens zwei reaktiven Wasserstoffatomen und gegebenenfalls
   c) niedermolekularen Kettenverlängerungs- und/oder Vernetzungsmitteln

   in Gegenwart von
   d) Treibmitteln,
   e) Katalysatoren und gegebenenfalls
   f) Hilfsmitteln und/oder Zusatzstoffen,

   dadurch gekennzeichnet, daß man als Treibmittel (d) mindestens eine organische Carbonsäure und als Katalysatoren (e) Polyisocyanuratkatalysatoren verwendet.

2. Verfahren nach Anspruch 1, dadurch gekennzeichnet, daß man die organischen Carbonsäuren in Verbindung mit Wasser und/oder physikalisch wirkenden Treibmitteln verwendet.

3. Verfahren nach Anspruch 1, dadurch gekennzeichnet, daß man als Treibmittel (d) aliphatische Monocarbonsäuren mit einem Molekulargewicht von 60 bis 300 verwendet.

4. Verfahren nach Anspruch 1, dadurch gekennzeichnet, daß man als Treibmittel (d) Essigsäure verwendet.

5. Verfahren nach Anspruch 1, dadurch gekennzeichnet, daß man die organische Carbonsäure oder -mischung in einer Menge von 0,5 bis 30 Gew.-Teilen, bezogen auf 100 Gew.-Teile der höhermolekularen Verbindung mit mindestens zwei reaktiven Wasserstoffatomen (b) verwendet.

6. Verfahren nach Anspruch 1, dadurch gekennzeichnet, daß man als Polyisocyanuratkatalysatoren Alkalisalze oder Ammoniumsalze von organischen Carbonsäuren oder Tris(dialkylaminoalkyl)-s-hexahydrotriazine verwendet.

7. Verfahren nach Anspruch 1, dadurch gekennzeichnet, daß die Polyisocyanuratkatalysatoren ausgewählt sind aus der Gruppe (Trimethyl-2-hydroxypropyl)ammoniumoctanoat, (Trimethyl-2-hydroxypropyl)-ammoniumformiat, Kaliumacetat, Kaliumformiat und Tris(dimethylaminopropyl)-s-hexahydrotriazin.

8. Verfahren nach Anspruch 1, dadurch gekennzeichnet, daß man die Polyisocyanuratkatalysatoren in einer Menge von 1 bis 10 Gew.-Teilen, bezogen auf 100 Gew.-Teile der höhermolekularen Verbindungen mit mindestens zwei reaktiven Wasserstoffatomen (b), verwendet.

**9.** Verfahren nach Anspruch 1, dadurch gekennzeichnet, daß die Isocyanatkennzahl in dem Bereich von 90 bis 500 liegt.

**10.** Verfahren nach Anspruch 1, dadurch gekennzeichnet, daß man als Treibmittel (d) mindestens eine aliphatische Monocarbonsäure, ausgewählt aus der Gruppe Essigsäure, Propionsäure und 2-Ethylhexansäure und als Katalysator (e) mindestens einen Polyisocyanuratkatalysator ausgewählt aus der Gruppe (Trimethyl-2-hydroxypropyl)ammoniumoctanoat, -formiat, Kaliumacetat, Kaliumformiat und Tris-(dialkylaminoalkyl)-s-hexahydrotriazin verwendet.

Europäisches Patentamt

# EUROPÄISCHER RECHERCHENBERICHT

Nummer der Anmeldung

**EP 91 11 3982**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | FR-A-2 342 309 (BAYER)<br>* Ansprüche 1,2,8,9 * * * Seite 2, Zeile 18 - Zeile 36 * * * Seite 4, Zeile 34 - Seite 5, Zeile 5 * * * Seite 7, Zeile 32 - Seite 9, Zeile 22 * * * Seite 11, Zeile 9 - Zeile 12 * *<br>– – – | 1-10 | C 08 J 9/08<br>C 08 G 18/00 //<br>C 08 L 75/04<br>C 08 L<br>C 08 L 79/04 |
| D,X | EP-A-0 372 292 (BAYER)<br>* Ansprüche 1-6 * * * Seite 3, Zeile 32 - Zeile 56 * * * Seite 4, Zeile 17 - Zeile 56 * * * Seite 5, Zeile 2 - Zeile 43 * *<br>– – – | 1-10 | |
| P,X | EP-A-0 409 199 (DOW)<br>* Ansprüche 1-5,7,8 * * * Seite 3, Zeile 26 - Seite 4, Zeile 25 * * * Seite 6, Zeile 3 - Zeile 49 * *<br>– – – | 1-10 | |
| D,X | US-A-4 473 666 (F.M.CASATI ET AL.)<br>* Anspruch 1 * * * Spalte 1, Zeile 65 - Spalte 2, Zeile 2 * * * Spalte 4, Zeile 14 - Zeile 28 * *<br>– – – | 1-5 | |
| X | US-A-4 066 580 (G.FALKENSTEIN ET AL.)<br>* Ansprüche 1,2,4,6 * * * Spalte 3, Zeile 16 - Spalte 4, Zeile 17 * * * Spalte 5, Zeile 32 - Zeile 57 * *<br>– – – | 1 | **RECHERCHIERTE SACHGEBIETE (Int. Cl.5)** |
| X | FR-A-2 509 317 (KABEL-UND-GUMMIWERKE)<br>* Ansprüche 1,2,4-7 * * * Seite 1, Zeile 36 - Seite 2, Zeile 31 * * * Seite 3, Zeile 8 - Zeile 33 * * * Seite 5, Zeile 19 - Zeile 28 * * * Seite 6, Zeile 11 - Zeile 26 * *<br>– – – | 1,2,5 | C 08 J<br>C 08 G |
| D | FR-A-2 509 317 (& DE-A-3 223 567)<br>– – – | | |
| A | US-A-3 476 933 (M.A.MENDELSOHN)<br>* Ansprüche 1,4,6 * * * Spalte 3, Zeile 72 - Spalte 4, Zeile 30 * *<br>– – –<br>–/– | 1 | |

Der vorliegende Recherchenbericht wurde für alle Patentansprüche erstellt

| Recherchenort | Abschlußdatum der Recherche | Prüfer |
|---|---|---|
| Den Haag | 03 Januar 92 | VAN PUYMBROECK M.A. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

Europäisches Patentamt

# EUROPÄISCHER RECHERCHENBERICHT

Nummer der Anmeldung

**EP 91 11 3982**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 746 664 (H.P.DOERGE ET AL.)<br>* Ansprüche 1,2,4,5 * * * Spalte 1, Zeile 57 - Spalte 2, Zeile 4 * * * Spalte 4, Zeile 36 - Zeile 60 * *<br>– – – – – | 1 | |
| | | | RECHERCHIERTE SACHGEBIETE (Int. Cl.5) |

Der vorliegende Recherchenbericht wurde für alle Patentansprüche erstellt

| Recherchenort | Abschlußdatum der Recherche | Prüfer |
|---|---|---|
| Den Haag | 03 Januar 92 | VAN PUYMBROECK M.A. |

KATEGORIE DER GENANNTEN DOKUMENTE
- X : von besonderer Bedeutung allein betrachtet
- Y : von besonderer Bedeutung in Verbindung mit einer anderen Veröffentlichung derselben Kategorie
- A : technologischer Hintergrund
- O : nichtschriftliche Offenbarung
- P : Zwischenliteratur
- T : der Erfindung zugrunde liegende Theorien oder Grundsätze

- E : älteres Patentdokument, das jedoch erst am oder nach dem Anmeldedatum veröffentlicht worden ist
- D : in der Anmeldung angeführtes Dokument
- L : aus anderen Gründen angeführtes Dokument

- & : Mitglied der gleichen Patentfamilie, übereinstimmendes Dokument